# EUROPEAN PATENT APPLICATION

(11) **EP 3 266 624 A1**
(43) Veröffentlichungstag der Anmeldung: **10.01.2018**
(21) Anmeldenummer: 16761449.4
(22) Anmeldetag: 18.02.2016
(51) Int. Cl.: B60C 11/03, B60C 11/12

(54) **LUFTREIFEN**

(30) Priorität: 06.03.2015 JP 2015044534
(71) Anmelder: The Yokohama Rubber Co., Ltd., Minato-ku Tokyo 105-8685 (JP)
(72) Erfinder: YAMAKAWA, Takahiro, Hiratsuka-shi Kanagawa 254-8601 (JP)
(74) Vertreter: Dilg, Haeusler, Schindelmann Patentanwaltsgesellschaft mbH
(86) Internationale Anmeldenummer: PCT/JP2016/054706
(87) Internationale Veröffentlichungsnummer: WO 2016/143477

(57) **Zusammenfassung**

Ein Luftreifen wird bereitgestellt, durch den gute Lenkstabilitätsleistung auf nassen Straßenoberflächen und gute Abriebbeständigkeitsleistung auf ausgewogene Weise erreicht werden können. Ein Luftreifen, in dem innere Stegabschnitte 21, die zwischen einer mittleren Hauptrille 11 und äußeren Hauptrillen 12 auf beiden Seiten der mittleren Hauptrille 11 gebildet werden, durch eine Mehrzahl von Nebenrillen 30 in eine Mehrzahl von Blöcken 21A geteilt werden. In diesem Luftreifen ist ein Paar der Nebenrillen 30, die auf beiden Seiten der mittleren Hauptrille 11 angeordnet sind, in die gleiche Richtung in Bezug auf die Reifenbreitenrichtung geneigt und derart angeordnet, dass Öffnungen auf der Seite der mittleren Hauptrille 11 mindestens teilweise in der Reifenumfangsrichtung überlappen und die Umfangsbestandteile der Nebenrillen 30 sind über den gesamten Reifenumfang fortlaufend. Zusätzlich ändert sich eine Rillenbreite jeder der Nebenrillen 30 an einem mittleren Abschnitt in der Längenrichtung davon derart, dass jede der Nebenrillen 30 einen schmalen Abschnitt 31, der auf der Seite der äußeren Hauptrille 12 angeordnet ist und eine Rillenbreite W1 aufweist, die relativ klein ist, und einen breiten Abschnitt 31 einschließt, der auf der Seite der mittleren Hauptrille 11 angeordnet ist und eine Rillenbreite W2 aufweist, die relativ groß ist. Darüber hinaus ist eine Lamelle 40 in jedem der Blöcke 21A gebildet, die einen Punkt, der am nächsten zur Seite des schmalen Abschnitts 31 vom breiten Abschnitts 32 liegt, mit dem schmalen Abschnitt 31 verbindet.

## Beschreibung

### Technisches Gebiet

Die vorliegende Erfindung betrifft einen Luftreifen und betrifft insbesondere einen Luftreifen, bei dem gute Lenkstabilitätsleistung auf nassen Straßenoberflächen und gute Abriebbeständigkeitsleistung auf ausgewogene Weise erreicht werden können.

### Stand der Technik

Üblicherweise werden Luftreifen, die in erster Linie auf leichten Lastkraftwagen und dergleichen verwendet werden, für lokale Fahrten eingesetzt und sind Fahrten mit wiederholtem Anhalten und Weiterfahren bei niedrigen bis mittleren Geschwindigkeiten ausgesetzt. Als solches besteht tendenziell eine Nachfrage nach überlegener Lenkstabilitätsleistung und überlegener Beständigkeitsleistung gegen ungleichmäßigen Abrieb von derartigen Luftreifen. Zudem müssen derartige Luftreifen mit verschiedenen Straßenoberflächenbedingungen fertig werden und Geräusche unterdrücken, wie Vorbeifahrgeräusch und dergleichen.

Als solches beschreibt Patentdokument 1 beispielsweise einen Luftreifen, bei dem eine Mehrzahl von Reihen von Stegabschnitten, die durch eine Mehrzahl von in eine Reifenumfangsrichtung verlaufenden Hauptumfangshauptrillen unterteilt wird, durch eine Mehrzahl von in Reifenbreitenrichtung verlaufenden untergeordneten Rillen in eine Mehrzahl von Blöcken unterteilt ist. In diesem Luftreifen ist eine Rillenbreite an einem mittleren Abschnitt in einer Längenrichtung derart geändert, dass jede der Nebenrillen einen breiten Abschnitt mit einer relativ größeren Rillenbreite und einen schmalen Abschnitt mit einer relativ kleineren Rillenbreite einschließt. Zusätzlich ist eine Lamelle, die den schmalen Abschnitt mit einem spezifischen Ort des breiten Abschnitts verbindet, in jedem Block bereitgestellt. Darüber hinaus sind eine Beziehung zwischen einer Breite W1 des breiten Abschnitts und einer Breite W2 des schmalen Abschnitts und eine Beziehung zwischen einer Länge L1 des breiten Abschnitts und einer Länge L2 des schmalen Abschnitts in einem spezifischen Bereich festgelegt. Als ein Ergebnis wird vorgeschlagen, dass gute Lenkstabilitätsleistung, Beständigkeitsleistung gegenüber ungleichmäßigem Abrieb, Nassleistung und Geräuschleistung auf eine kompatible Weise erreicht werden.

In den letzten Jahren, insbesondere bei Verwenden von Luftreifen in Entwicklungsländern und dergleichen, wird jedoch erwartet, dass Luftreifen häufig in einem stark beladenen Zustand oder für Fahrten auf nassen Straßenoberflächen eingesetzt werden. Insbesondere wenn in einem stark beladenen Zustand, erhöht sich die Belastung auf den Blöcken und als Folge tritt Abnutzung nicht nur wahrscheinlicher auf dem gesamten Reifen auf, sondern es besteht auch eine Tendenz dazu, dass sich das Rillenvolumen aufgrund der Verformung der Blöcke und des Zusammensinkens der Rillen verringert, was zu Abnahmen bei der Abflussleistung führt. Als solches besteht ein Problem unzureichender Abriebbeständigkeitsleistung und Nassleistung in Luftreifen wie den oben beschriebenen. Es besteht daher ein Bedarf, überlegene Abriebbeständigkeitsleistung zu den oben beschriebenen Leistungsfaktoren hinzuzufügen und auch ferner die Lenkstabilitätsleistung auf nassen Straßenoberflächen (Nassleistung) weiter zu verbessern.

### Liste der Entgegenhaltungen

### Patentliteratur

Patentdokument 1: Japanisches Patent Nr. 5590267B

### Kurzbeschreibung der Erfindung

### Technisches Problem

Eine Aufgabe der vorliegenden Erfindung ist die Bereitstellung eines Luftreifens, durch den gute Lenkstabilitätsleistung auf nassen Straßenoberflächen und gute Abriebbeständigkeitsleistung auf ausgewogene Weise erreicht werden können.

### Lösung für das Problem

Ein Luftreifen der vorliegenden Erfindung, der das oben beschriebene Ziel erreicht, schließt eine mittlere Hauptrille, die in Reifenumfangsrichtung auf einem Reifenäquator eines Laufflächenabschnitts verläuft; eine äußere Hauptrille, die in Reifenumfangsrichtung auf beiden Seiten in Reifenbreitenrichtung der mittleren Hauptrille verläuft; innere Stegabschnitte, die zwischen der mittleren Hauptrille und den außeren Hauptrillen geteilt gebildet sind; und eine Mehrzahl von Nebenrillen ein, die in einem Abstand in Reifenumfangsrichtung gebildet sind und sich in den inneren Stegabschnitten in Reifenbreitenrichtung erstrecken, wofür ein erstes Ende mit der mittleren Hauptrille kommuniziert und ein zweites Ende mit der außeren Hauptrille kommuniziert, wobei die inneren Stegabschnitte von der Mehrzahl der Nebenrillen in eine Mehrzahl von Blöcken geteilt sind. In einem derartigen Luftreifen ist ein Paar der Nebenrillen, die auf beiden Seiten der mittleren Hauptrille angeordnet sind, in eine gleiche Richtung in Bezug auf die Reifenbreitenrichtung geneigt und derart angeordnet, dass Öffnungen auf einer Seite der mittleren Hauptrille mindestens teilweise in der Reifenumfangsrichtung überlappen; die Nebenrillen sind derart angeordnet, dass Umfangsbestandteile der Nebenrillen über einen gesamten Reifenumfang fortlaufend sind; eine Rillenbreite jeder der Nebenrillen verändert sich an einem mittleren Abschnitt in einer Längsrichtung der Nebenrillen derart, dass jede der Nebenrillen einen schmalen Abschnitt, der auf einer Seite der außeren Hauptrille angeordnet ist und eine Rillenbreite W1 aufweist, die relativ gering ist, und einen breiten Abschnitt einschließt, der auf der Seite der mittleren Hauptrille angeordnet ist und eine Rillenbreite W2 aufweist, die relativ groß ist; und eine Lamelle ist in jedem Block gebildet, die einen Punkt an weitesten zu einer Seite des schmalen Abschnitts vom breiten Abschnitt mit dem schmalen Abschnitt verbindet.

### Vorteilhafte Auswirkungen der Erfindung

Bei der vorliegenden Erfindung ist das Paar der Nebenrillen, das auf beiden Seiten der mittleren Hauptrille angeordnet ist, in die gleiche Richtung in Bezug auf die Reifenbreitenrichtung geneigt und derart angeordnet ist, dass die Öffnungen auf der Seite der mittleren Hauptrille mindestens teilweise in der Reifenumfangsrichtung überlappen. Als solches ist das Paar Nebenrillen, das über die mittlere Hauptrille benachbart ist, im Wesentlichen fortlaufend und als eine Folge ist der Fluss von Wasser, das durch die Nebenrillen fließt, hervorragend. Somit kann Abflussleistung verbessert werden und Nassleistung kann verbessert werden. Zusätzlich kann Abflussleistung verbessert werden und als eine Folge kann Nassleistung verbessert werden aufgrund der Tatsache, dass die Umfangsbestandteile der Nebenrillen über den ganzen Reifenumfang fortlaufend sind. Darüber hinaus schließt jede der Nebenrillen den schmalen Abschnitt auf der Seite der außeren Hauptrille und den breiten Abschnitt auf der Seite der mittleren Hauptrille ein. Als eine Folge kann Abflussleistung verbessert werden aufgrund der Tatsache, dass der breite Abschnitt auf der Seite der mittleren Hauptrille vorliegt, und gleichzeitig können Abnahmen der Blocksteifigkeit aufgrund des schmalen Abschnitts unterdrückt werden und somit kann Abriebbeständigkeit verbessert werden. Ferner, durch Bereitstellen der Lamelle, wie oben beschrieben, kann Abflussleistung der Lamelle erhalten werden und gleichzeitig kann Blocksteifigkeit angemessen gestaltet werden, was vorteilhaft ist, um sowohl gute Nassleistung und Abriebbeständigkeit auf kompatible Weise zu erreichen. Es ist zu beachten, dass in der vorliegenden Erfindung die Umfangsbestandteile der Nebenrillen Bestandteile in Umfangsrichtung der Nebenrillen sind, die erhalten werden, indem die Nebenrillen in Reifenbreitenrichtung hinausragen.

In der vorliegenden Erfindung ist es vorzuziehen, dass ein Neigungswinkel der Nebenrillen in Bezug auf die Reifenbreitenrichtung von 10° bis 50° beträgt. Durch Konfigurieren des Neigungswinkels der Nebenrillen auf diese Weise kann verhindert werden, dass Eckabschnitte der Blöcke, wo die Nebenrillen und die zwischenliegende Hauptrille oder die außeren Hauptrillen kommunizieren, übermäBig spitzwinklig werden, was für die Verbesserung der Abriebbeständigkeit vorteilhaft ist. Es ist zu beachten, dass der Neigungswinkel von der Mittellinie jeder der Nebenrillen gemessen wird.

In der vorliegenden Erfindung ist es bevorzugt, dass eine Rillentiefe des schmalen Abschnitts auf der Seite des breiten Abschnitts flach und auf der Seite der außeren Hauptrillen tief ist. Durch derartiges Konfigurieren der Rillentiefe der Nebenrillen wird die Steifigkeit an den Abschnitten, wo die Rillentiefe flach ist, erhöht, was für die Verbesserung der Abriebbeständigkeit vorteilhaft ist, und überlegene Abflussleistung kann an den Abschnitten erreicht werden, wo die Rillentiefe tief ist. Somit ist es möglich, diese Leistungsfaktoren auf eine ausgewogene Weise zu erreichen.

In diesem Fall ist es bevorzugt, dass ein Verhältnis d1a/d1b einer Rillentiefe d1a auf der Seite des breiten Abschnitts von dem schmalen Abschnitt zu einer Rillentiefe d1b auf der Seite der außeren Hauptrille von dem schmalen Abschnitt in einem Bereich von 0,3 bis 0,7 liegt.

Durch derartiges Konfigurieren der Rillentiefe ist es möglich, effektiver die Effekte des Erreichens guter Nassleistung und Abriebbeständigkeitsleistung auf kompatible Weise zu erzielen.

In der vorliegenden Erfindung ist es bevorzugt, dass ein Verhältnis einer Gesamtheit von Rillenbreiten der mittleren Hauptrille und der außeren Hauptrillen in Bezug auf eine Bodenkontaktbreite von 13% bis 23% beträgt. Durch derartiges Konfigurieren der Gesamtbreite der Hauptrillen (die mittlere Hauptrille und die außeren Hauptrillen) wird Blockbreite gesichert, ausreichende Blocksteifigkeit wird erhalten und Abriebbeständigkeitsleistung kann verbessert werden und gleichzeitig wird Rillenvolumen gesichert und ausreichende Abflussleistung kann erhalten werden, was vorteilhaft für das Erreichen dieser Leistungsfaktoren auf ausgewogene Weise ist.

Es wird bevorzugt, dass der Luftreifen gemäß der vorliegenden Erfindung bei einem Luftreifen zur Verwendung auf einem Kleinlastwagen angewendet wird, wobei ein regulärer Innendruck des Luftreifens 575 kPa oder weniger beträgt. Durch Anwenden des erfindungsgemäßen Luftreifens auf einen derartigen Reifen, wenn dieser Reifen verwendet wird und insbesondere bei der Fahrt auf nassen Straßenoberflächen in einem schwer beladenen Zustand, können die vorstehend beschriebene überlegene Abflussleistung und Abriebbeständigkeitsleistung gezeigt werden.

In der vorliegenden Erfindung ist die "Reifenbodenkontaktbreite" die Länge in der Reifenaxialrichtung zwischen den Endabschnitten (Bodenkontaktränder), wenn der Reifen auf eine reguläre Felge aufgezogen ist, auf einen regulären Innendruck gefüllt und vertikal auf einer flachen Oberfläche mit einer daran angelegten regulären Last angeordnet ist. "Normale Felge" ist eine Felge, die durch einen Standard für jeden Reifen gemäß einem Standardsystem definiert ist, das Standards einschließt, auf denen Reifen basieren, und bezieht sich auf eine "Standardfelge" im Fall der Japan Automobile Tyre Manufacturers Association (JATMA), auf eine "Entwurfsfelge" im Fall der Tire und Rim Association (TRA) und auf eine "Messfelge" im Fall der European Tyre und Rim Technical Organisation (ETRTO). "Normaler Innendruck" ist der Luftdruck, der durch Standards für jeden Reifen nach einem System von Standards definiert ist, das Standards umfasst, auf denen Reifen basieren, und bezieht sich auf einen "maximalen Luftdruck" im Falle von JATMA, auf den maximalen Wert in der Tabelle "TIRE ROAD LIMITS AT VARIOUS COLD INFLATION PRESSURE" (REIFENSTRASSENGRENZWERTE BEI VERSCHIEDENEN KALTREIFENDRUCKWERTEN) im Falle von TRA und auf den "Befülldruck" im Falle von ETRTO. "Regulärer Innendruck" ist 180 kPa für einen Reifen auf einem Personenkraftwagen. "Reguläre Last" ist die Last, die durch Standards für jeden Reifen gemäß eines Standardsystems definiert ist, das Standards einschließt, auf denen Reifen basieren, und bezieht sich auf eine "maximale Lastkapazität" im Falle der JATMA, den maximalen Wert in der Tabelle "TIRE ROAD LIMITS AT VARIOUS COLD INFLATION PRESSURES" (REIFENSTRASSENGRENZWERTE BEI VERSCHIEDENEN KALTREIFENDRUCKWERTEN) im Falle der TRA und "LASTKAPAZITÄT" im Falle der ETRTO. "Reguläre Last" entspricht 88% der oben beschriebenen Lasten für einen Reifen auf einem Personenkraftwagen.

### Kurzbeschreibung der Zeichnungen

Fig. 1 ist eine Meridianquerschnittsansicht eines Luftreifens gemäß einer Ausführungsform der vorliegenden Erfindung.
Fig. 2 ist eine Vorderansicht, die eine Laufflächenoberfläche des Luftreifens gemäß einer Ausführungsform der vorliegenden Erfindung darstellt.
Fig. 3 ist eine vergrößerte Frontansicht, die einen in Fig. 2 dargestellten inneren Stegabschnitt veranschaulicht.
Fig. 4 ist ein Erläuterungsdiagramm, das einen aus dem in Fig. 3 dargestellten inneren Stegabschnitt extrahierten Abschnitt veranschaulicht.
Fig. 5 ist eine vergrößerte Frontansicht, die einen Block eines Luftreifens gemäß einer weiteren Ausführungsform der vorliegenden Erfindung veranschaulicht.
Fig. 6 ist eine vergrößerte Frontansicht, die einen Block eines Luftreifens gemäß einer weiteren Ausführungsform der vorliegenden Erfindung veranschaulicht.

### Beschreibung von Ausführungsformen

Ausführungsformen der vorliegenden Erfindung werden nachstehend ausführlich unter Bezugnahme auf die beigefügten Zeichnungen erläutert.

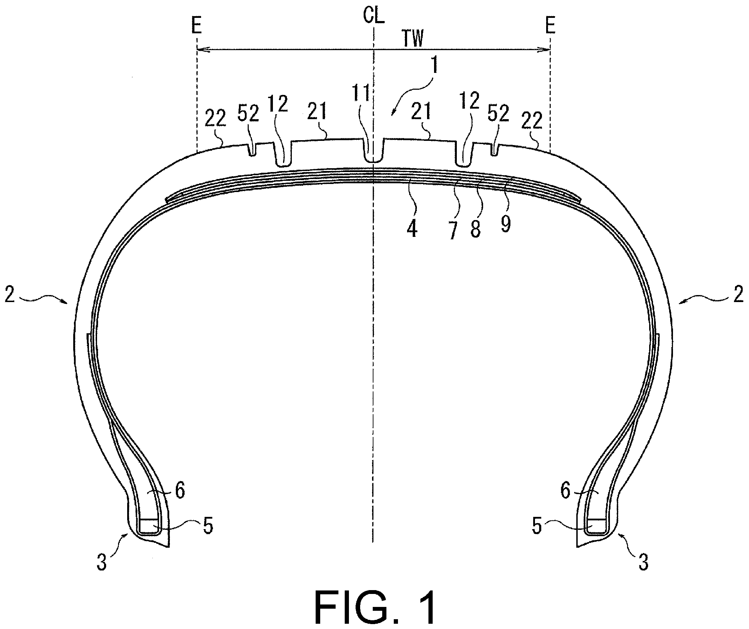

Das Referenzzeichen CL in Fig. 1 bezeichnet den Reifenäquator. Ein Luftreifen T weist einen Laufflächenabschnitt 1, einen Seitenwandabschnitt 2 und einen Reifenwulstabschnitt 3 auf. Eine Karkassenschicht 4 verläuft zwischen dem Links-Rechts-Paar von Reifenwulstabschnitten 3. Die Karkassenschicht 4 umfasst eine Mehrzahl von in Reifenradialrichtung verlaufenden, verstärkenden Cordfäden und ist um einen in jedem Reifenwulstabschnitt 3 angeordneten Reifenwulstkern 5 von einer Fahrzeuginnenseite hin zu einer Fahrzeugaußenseite zurückgefaltet. Außerdem sind Wulstfüller 6 auf der Peripherie der Reifenwulstkerne 5 angeordnet und jeder Wulstfüller 6 ist von einem Hauptkörperabschnitt und einem zurückgefalteten Abschnitt der Karkassenschicht 4 umschlossen. In dem Laufflächenabschnitt 1 ist eine Mehrzahl von Gürtelschichten 7, 8 (zwei Schichten in FIG. 1) auf der außeren Umfangsseite der Karkassenschicht 4 eingebettet. Jede Gürtelschicht 7, 8 umfasst eine Mehrzahl von bezogen auf die Reifenumfangsrichtung geneigten, verstärkenden Cordfäden und die Richtungen der verstärkenden Cordfäden der verschiedenen Schichten überschneiden einander. In den Gürtelschichten 7, 8 ist der Neigungswinkel der verstärkenden Cordfäden bezogen auf die Reifenumfangsrichtung im Bereich von zum Beispiel 10° bis 40° festgelegt. Zudem ist eine Gürtelverstärkungsschicht 9 auf der außeren Umfangsseite der Gürtelschichten 7, 8 angeordnet. Die Gürtelverstärkungsschicht 9 umfasst organische Fasercordfäden, die in Reifenumfangsrichtung ausgerichtet sind. In der Gürtelverstärkungsschicht 9 ist der Winkel der organischen Fasercordfäden bezogen auf die Reifenumfangsrichtung zum Beispiel auf 0° bis 5° festgelegt.

Die vorliegende Erfindung kann auf einen derartigen allgemeinen Luftreifen angewendet werden, die Querschnittsstruktur davon ist jedoch nicht auf die vorstehend beschriebene grundlegende Struktur beschränkt.

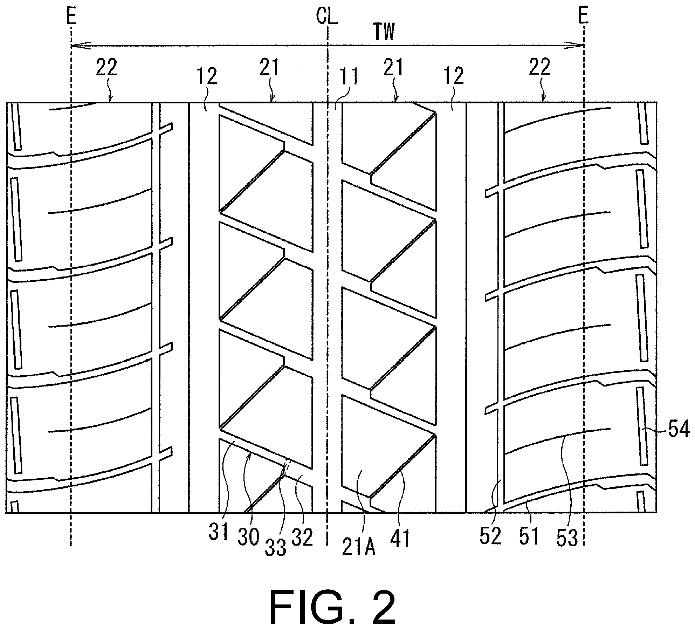

Wie in Fig. 2 dargestellt, ist eine mittlere Hauptrille 11, die in Reifenumfangsrichtung verläuft, auf dem Reifenäquator CL des Laufflächenabschnitts 1 bereitgestellt und eine äußere Hauptrille 12, die in Reifenumfangsrichtung verläuft, ist auf beiden Seiten in Reifenbreitenrichtung der mittleren Hauptrille 11 bereitgestellt. Zusätzlich sind innere Stegabschnitte 21, die in Reifenumfangsrichtung verlaufen, zwischen der mittleren Hauptrille 11 und jeder der außeren Hauptrillen 12 geteilt gebildet und äußere Stegabschnitte 22, die in Reifenumfangsrichtung verlaufen, sind außen in Reifenbreitenrichtung von den außeren Hauptrillen 12 geteilt gebildet.

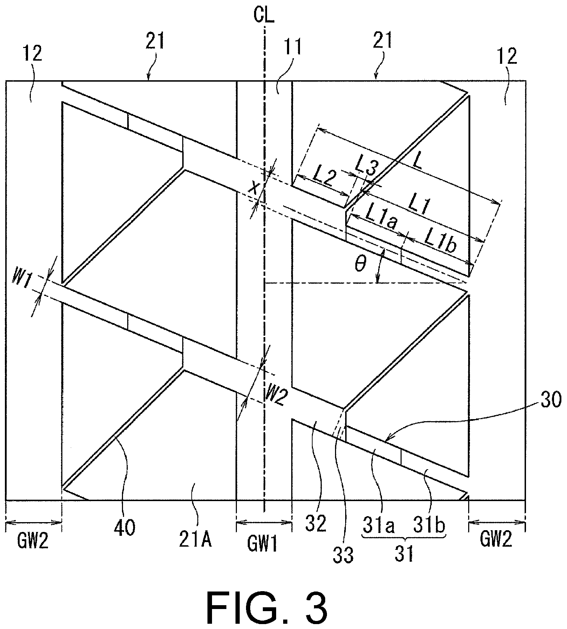

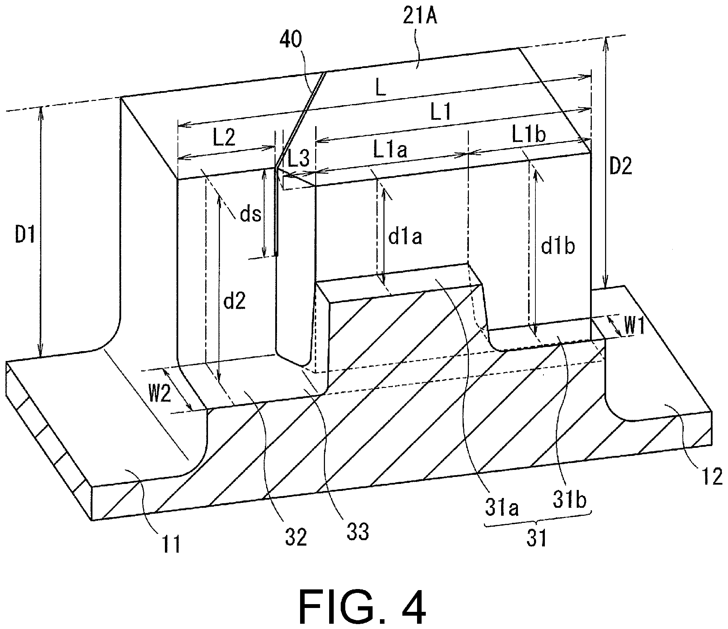

Wie in Fig. 3 und 4 vergrößert und abgebildet, ist eine Mehrzahl von Nebenrillen 30, die in Reifenbreitenrichtung verlaufen, in den inneren Stegabschnitten 21 in einem Abstand in Reifenumfangsrichtung gebildet. Ein erstes Ende der Nebenrillen 30 kommuniziert mit der mittleren Hauptrille 11 und ein zweites Ende kommuniziert mit den außeren Hauptrillen 12. Eine Rillenbreite jeder der Nebenrillen 30 ändert sich an einem mittleren Abschnitt in einer Längsrichtung davon derart, dass jede der Nebenrillen 30 einen schmalen Abschnitt 31, der auf der Seite der außeren Hauptrille 12 angeordnet ist und eine Rillenbreite W1 aufweist, die relativ klein ist, und einen breiten Abschnitt 32 einschließt, der auf der Seite der mittleren Hauptrille 11 angeordnet ist und eine Rillenbreite W2 aufweist, die relativ groß ist. Insbesondere in dem in Fig. 2 bis 4 dargestellten Beispiel verläuft auf der Oberfläche des Laufflächenabschnitts 1 die Kante der ersten Seite der Nebenrille 30 linear und die Kante der zweiten Seite ist in einer stufenartigen Form gebogen. Als eine Folge werden der schmale Abschnitt 31 und der breite Abschnitt 32 gebildet. Zusätzlich besteht in dem in Fig. 2 bis 4 dargestellten Beispiel ein Änderungsabschnitt 33, wo sich die Rillenbreite graduell ändert, zwischen dem schmalen Abschnitt 31 und dem breiten Abschnitt 32.

Jede der Nebenrillen 30 ist in Bezug auf die Reifenbreitenrichtung geneigt. Insbesondere ist ein Paar der Nebenrillen 30, die auf beiden Seiten der mittleren Hauptrille 11 angeordnet sind, in die gleiche Richtung in Bezug auf die Reifenbreitenrichtung geneigt und derart angeordnet, dass Offnungen auf der Seite der mittleren Hauptrille 11 des Paars Nebenrillen 30, die auf beiden Seiten der mittleren Hauptrille 11 angeordnet sind, mindestens teilweise in der Reifenumfangsrichtung überlappen. Zusätzlich sind Umfangsbestandteile der Nebenrillen 30 derart angeordnet, dass sie über den gesamten Reifenumfang fortlaufend sind.

Die inneren Stegabschnitte 21 sind durch diese Nebenrillen 30 in eine Mehrzahl von Blöcken 21A geteilt. Eine Lamelle 40 wird in jedem der Blöcke 21A bereitgestellt. Bei der Lamelle 40, die in jedem der Blöcke 21A bereitgestellt ist, kommuniziert ein erstes Ende mit einem Punkt, der am weitesten zur Seite des schmalen Abschnitts 31 vom breiten Abschnitt 32 liegt (in dem in den Zeichnungen dargestellten Beispiel die Grenze zwischen dem breiten Abschnitt 32 und dem Änderungsabschnitt 33), und ein zweites Ende kommuniziert mit einem gewünschten Punkt auf dem schmalen Abschnitt 31 (in dem in den Zeichnungen dargestellten Beispiel der Punkt, wo der schmale Abschnitt 31 mit der außeren Hauptrille 12 verbunden ist).

In dem in Fig. 2 dargestellten Beispiel ist eine Mehrzahl von außeren Nebenrillen 51, die in Reifenbreitenrichtung verlaufen, in einem Abstand in Reifenumfangsrichtung in den außeren Stegabschnitten 22 bereitgestellt. Bei den außeren Nebenrillen 51 kommuniziert ein Endabschnitt auf der inneren Seite in Reifenbreitenrichtung nicht mit der außeren Hauptrille 12 und endet innerhalb des außeren Stegabschnitts 22 und ein Endabschnitt auf der außeren Seite in Reifenbreitenrichtung kreuzt den Bodenkontaktrand E und erstreckt sich in Reifenbreitenrichtung nach außen. Zusätzlich ist eine schmale Umfangsrille 52, die in Reifenumfangsrichtung verläuft und die äußere Nebenrille 51 schneidet, in jeder der außeren Nebenrillen 51 bereitgestellt. Eine äußere Lamelle 53 ist in einem Abschnitt bereitgestellt, der durch die äußere Nebenrille 51 und die schmale Umfangsrille 52 abgeteilt ist. Die äußere Lamelle 53 ist zwischen den außeren Nebenrillen 51, die in Reifenumfangsrichtung benachbart sind, angeordnet und verläuft in derselben Richtung wie die außeren Nebenrillen 51. Bei der außeren Lamelle 53 kommuniziert ein Endabschnitt auf der inneren Seite in Reifenbreitenrichtung mit der schmalen Umfangsrille 52 und ein Endabschnitt auf der außeren Seite in Reifenbreitenrichtung kreuzt den Bodenkontaktrand E, erstreckt sich und endet in dem außeren Stegabschnitt 22. Außerdem ist eine Hilfsrille 54, die in Reifenumfangsrichtung verläuft, aber nicht mit den außeren Nebenrillen 51 kommuniziert, weiter außen in Reifenbreitenrichtung als der Endabschnitt auf der außeren Seite in Reifenbreitenrichtung der außeren Lamelle 53 bereitgestellt. Es ist zu beachten, dass die vorliegende Erfindung die Struktur der mittleren Hauptrille 11, der außeren Hauptrillen 12 und der inneren Stegabschnitte 21, die zwischen der mittleren Hauptrille 11 und den außeren Hauptrillen 12 abgeteilt sind, spezifiziert. Als solches ist die Konfiguration der außeren Stegabschnitte 22 nicht auf die vorstehend beschriebene Struktur beschränkt.

Wie vorstehend beschrieben sind die Nebenrillen 30 in den inneren Stegabschnitten 21 bereitgestellt, die auf beiden Seiten der mittleren Hauptrille 11 positioniert sind. Als solches ist das Paar Nebenrillen 30, die über die mittlere Hauptrille 11 benachbart sind, im Wesentlichen fortlaufend und als eine Folge ist der Fluss von Wasser, das durch die Nebenrillen 30 fließt, hervorragend. Somit kann Abflussleistung verbessert werden und Nassleistung kann verbessert werden. Zusätzlich wird die Abflussleistung verbessert und die Nassleistung kann aufgrund der Tatsache verbessert werden, dass die Umfangsbestandteile der Nebenrillen 30 über den gesamten Reifenumfang fortlaufend sind und die Bestandteile der Nebenrillen 30 während der Reifendrehung konstant in der Bodenkontaktoberfläche vorhanden sind. Darüber hinaus schließt jede der Nebenrillen 30 den schmalen Abschnitt 31 auf der Seite der außeren Hauptrille 12 und den breiten Abschnitt 32 auf der Seite der mittleren Hauptrille 11 ein. Als eine Folge kann Abflussleistung verbessert werden aufgrund der Tatsache, dass der breite Abschnitt 32 auf der Seite der mittleren Hauptrille 11 vorliegt, und gleichzeitig können Abnahmen der Blocksteifigkeit aufgrund des schmalen Abschnitts 31 unterdrückt werden und somit kann Abriebbeständigkeit verbessert werden. Ferner kann, durch Bereitstellen der Lamelle 40, wie oben beschrieben, die Abflussleistung der Lamelle 40 erhalten werden und gleichzeitig kann die Steifigkeit jedes der Blöcke 21A angemessen gestaltet werden, was vorteilhaft ist, um sowohl gute Nassleistung als auch Abriebbeständigkeit auf kompatible Weise zu erreichen.

Wenn die Öffnungen auf der Seite der mittleren Hauptrille 11 des Paars Nebenrillen 30, die auf beiden Seiten der mittleren Hauptrille 11 positioniert sind, hier in Reifenumfangsrichtung versetzt angeordnet sind, kann keine ausreichende Abflussleistung erreicht werden. In Fällen, wo die Umfangsbestandteile der Nebenrillen 30 über den gesamten Reifenumfang unterbrochen sind, kann außerdem keine ausreichende Abflussleistung erreicht werden.

In der vorliegenden Erfindung sind insgesamt drei Hauptrillen, nämlich die mittlere Hauptrille 11 und die außeren Hauptrillen 12, die auf beiden Seiten der mittleren Hauptrille 11 angeordnet sind, in der Oberfläche des Laufflächenabschnitts 1 bereitgestellt. Wenn jedoch vier oder mehr Hauptrillen bereitgestellt werden, nimmt die Blocksteifigkeit ab und es kann keine ausreichende Abriebbeständigkeitsleistung erhalten werden. Insbesondere um ausreichende Abflusseigenschaften zu erhalten, während Blocksteifigkeit beibehalten wird, wird bevorzugt, dass ein Anteil der Gesamtheit einer Rillenbreite GW1 der mittleren Hauptrille 11 und einer Rillenbreite GW2 der außeren Hauptrillen 12 (GW1 + 2 x GW2) in Bezug auf eine Bodenkontaktbreite TW in einem Bereich von 13% bis 23% liegt. Durch derartiges Konfigurieren der Gesamtbreite der mittleren Hauptrille 11 und der außeren Hauptrillen 12 wird Blockbreite gesichert, ausreichende Blocksteifigkeit wird erhalten und Abriebbeständigkeitsleistung kann verbessert werden und gleichzeitig wird Rillenvolumen gesichert und ausreichende Abflussleistung kann erhalten werden. Wenn die Gesamtheit der Rillenbreiten weniger als 13% der Bodenkontaktbreite TW beträgt, wird es hier schwierig sein, ausreichende Abflussleistung zu erhalten und, wenn die Gesamtheit der Rillenbreiten größer als 23% der Bodenkontaktbreite TW ist, wird es schwierig sein, ausreichende Blocksteifigkeit zu erhalten.

In der vorliegenden Erfindung schließen die Nebenrillen 30 den schmalen Abschnitt 31 und den breiten Abschnitt 32 ein, aber es ist bevorzugt, dass ein Verhältnis W1/W2 die Beziehung 0,30 ≤ W1/W2 ≤ 0,70 erfüllt, wo W1 die Rillenbreite des schmalen Abschnitts 31 ist und W2 die Rillenbreite des breiten Abschnitts 32 ist. Durch derartiges Konfigurieren der Beziehung der Rillenbreite kann eine gute Ausgewogenheit zwischen den Rillenbreiten des schmalen Abschnitts 31 und des breiten Abschnitts 32 erhalten werden und es ist möglich, gute Abflussleistung durch den breiten Abschnitt 32 und gute Beibehaltung der Festigkeit durch den schmalen Abschnitt 31 auf kompatible Weise effektiv zu erreichen. Wenn das Verhältnis W1/W2 weniger als 0,30 beträgt, ist der Unterschied zwischen den Rillenbreiten des schmalen Abschnitts 31 und des breiten Abschnitts 32 hier zu groß und es wird schwierig sein, die vorstehend beschriebenen vorteilhaften Wirkungen auf ausgewogene Weise zu erhalten. Wenn das Verhältnis W1/W2 größer als 0,70 ist, ist der Unterschied zwischen den Rillenbreiten des schmalen Abschnitts 31 und des breiten Abschnitts 32 geringer, somit zu einer Konfiguration führend, die einer Konfiguration entspricht, in der Nebenrillen 30 mit im Wesentlichen einheitlichen Rillenbreiten bereitgestellt werden. Infolgedessen werden die gewünschten vorteilhaften Wirkungen von der Bereitstellung des schmalen Abschnitts 31 und des breiten Abschnitts 32 nicht ausreichend erhalten. Es ist zu beachten, dass die Rillenbreite W2 des breiten Abschnitts 32 beispielsweise auf einen Bereich von 2 mm bis 10 mm eingestellt werden kann.

Es wird bevorzugt, dass eine überlappende Menge x der Öffnungen auf der Seite der mittleren Hauptrille 11 vom Paar Nebenrillen 30 (d. h. die Öffnungen der breiten Abschnitte 32), das auf beiden Seiten der mittleren Hauptrille 11 angeordnet ist, nicht weniger als 10% der Rillenbreite beträgt (die Rillenbreite W2 des breiten Abschnitts 32). Abflussleistung kann ferner durch ausreichendes Überlappen der Offnungen auf der Seite der mittleren Hauptrille 11 vom Paar Nebenrillen 30, das auf beiden Seiten der mittleren Hauptrille 11 angeordnet ist, auf diese Weise verbessert werden, so dass das Paar Nebenrillen 30, das auf beiden Seiten der mittleren Hauptrille 11 angeordnet ist, fortlaufend ist. Wenn die überlappende Menge x weniger als 10% der Rillenbreite W2 beträgt und die Offnungen des Paars Nebenrillen 30 stark versetzt werden, ist es schwierig, die Abflussleistung ausreichend zu verbessern.

Eine Rillentiefe von jeder der Nebenrillen 30 kann über die gesamte Länge der Nebenrille 30 konstant sein, aber es ist bevorzugt, dass die Rillentiefe des schmalen Abschnitts 31 relativ flach auf der Seite des breiten Abschnitts 32 und relativ tief auf der Seite der außeren Hauptrille 12 ist. Durch derartiges Konfigurieren der Rillentiefe der Nebenrillen 30 (der schmale Abschnitt 31) wird die Steifigkeit an einem Abschnitt 31a, wo die Rillentiefe flach ist, erhöht, was für die Verbesserung der Abriebbeständigkeit vorteilhaft ist, und überlegene Abflussleistung kann an einem Abschnitt 31b erreicht werden, wo die Rillentiefe tief ist, was es ermöglicht, diese Leistungsfaktoren auf ausgewogene Weise zu erreichen.

Insbesondere ist es bevorzugt, dass ein Verhältnis d1a/d1b in einem Bereich von 0,3 bis 0,7 liegt, wo d1a eine Rillentiefe auf der Seite des breiten Abschnitts 32 vom schmalen Abschnitt 31 ist und d1b eine Rillentiefe auf der Seite der außeren Hauptrille 12 vom schmalen Abschnitt 31 ist. Durch derartiges Konfigurieren der Rillentiefe ist es möglich, effektiver die Effekte des Erreichens guter Nassleistung und Abriebbeständigkeitsleistung auf kompatible Weise zu erzielen. Wenn das Verhältnis d1a/d1b der Rillentiefen weniger als 0,3 beträgt, ist der Unterschied zwischen den Rillentiefen des schmalen Abschnitts 31 und des breiten Abschnitts 32 hier zu gro und es wird schwierig sein, sowohl Abflussleistung als auch Abriebbeständigkeitsleistung auf ausgewogene Weise zu erhalten. Wenn das Verhältnis d1a/d1b der Rillentiefen größer als 0,7 ist, ist die Konfiguration einem Fall gleichwertig, in dem die Rillentiefe im Wesentlichen gleichförmig konfiguriert ist, und infolgedessen werden die gewünschten vorteilhaften Wirkungen des Variierens der Rillentiefe nicht ausreichend erhalten.

Des Weiteren, wenn d2 eine Rillentiefe des breiten Abschnitts 32 ist, ist es bevorzugt, das ein Verhältnis d1a/d2 der Rillentiefe d1a zur Rillentiefe d2 in einem Bereich von 0,40 bis 0,60 eingestellt ist und ein Verhältnis d1b/d2 der Rillentiefe d1b zur Rillentiefe d2 in einem Bereich von 0,75 bis 0,95 eingestellt ist. Durch derartiges Konfigurieren der Beziehung zwischen den Rillentiefen ist es möglich, effektiver die Effekte des Erreichens guter Nassleistung und Abriebbeständigkeitsleistung auf kompatible Weise zu erzielen.

Des Weiteren, wenn D1 eine Rillentiefe der mittleren Hauptrille 11 ist und D2 eine Rillentiefe der außeren Hauptrillen 12 ist, ist es bevorzugt, das ein Verhältnis d2/D1 der Rillentiefe d2 zur Rillentiefe D1 in einem Bereich von 0,65 bis 0,85 eingestellt ist und ein Verhältnis d1b/D2 der Rillentiefe d1b zur Rillentiefe D2 in einem Bereich von 0,60 bis 0,80 eingestellt ist. Durch derartiges Konfigurieren der Beziehung zwischen den Rillentiefen ist es möglich, effektiver die Effekte des Erreichens guter Nassleistung und Abriebbeständigkeitsleistung auf kompatible Weise zu erzielen.

In Bezug auf das derartige Einstellen der Rillentiefen ist es bevorzugt, dass die Beziehungen 0,25 ≤ L2/L1 ≤ 0,65 und 1,1 ≤ L1a/L1b ≤ 1,5 erfüllt sind, wo L1 eine Länge des schmalen Abschnitts 31 ist, L2 eine Länge des breiten Abschnitts 32 ist, L1a eine Länge des Teilbereichs 31a des schmalen Abschnitts 31 ist, wo die Rillentiefe d1a ist, und L1b eine Länge des Teilbereichs 31b in dem schmalen Abschnitt 31 ist, wo die Rillentiefe d1b ist. Zusätzlich, wie in den Beispielen von Fig. 2 bis 4 dargestellt, wo der Änderungsabschnitt 33 bereitgestellt ist, ist es bevorzugt, dass die Beziehung 0 ≤ L3/L ≤ 0,15 erfüllt ist, wo L eine gesamte Länge der Nebenrille 30 ist und L3 eine Länge des Änderungsabschnitts 33 ist. Durch derartiges Konfigurieren der Längen ist es möglich, effektiver die Effekte des Erreichens guter Nassleistung und Abriebbeständigkeitsleistung auf kompatible Weise zu erzielen. Es ist zu beachten, dass die Längen L, L1, L2, L3, L1a und L1b alle Längen von Teilabschnitten sind, gemessen entlang der Längsrichtung der Nebenrille 30, wie in Fig. 3 und 4 dargestellt.

Ein Neigungswinkel θ von jeder der Nebenrillen 30 in Bezug auf die Reifenbreitenrichtung ist vorzugsweise 10° bis 50° und mehr bevorzugt in einem Bereich von 15° bis 40° eingestellt. Durch derartiges Konfigurieren des Neigungswinkels θ der Nebenrillen 30 kann verhindert werden, dass Eckabschnitte der Blöcke 21A, wo die Nebenrillen 30 und die zwischenliegende Hauptrille 11 oder die außeren Hauptrillen 12 kommunizieren, übermäßig spitzwinklig werden, was für die Verbesserung der Abriebbeständigkeit vorteilhaft ist. Hier, wenn der Neigungswinkel θ kleiner als 10° ist, verlaufen die Nebenrillen 30 im Wesentlichen entlang der Reifenbreitenrichtung und es wird schwierig zu verursachen, dass die Nebenrillen 30 über den gesamten Reifenumfang fortlaufend sind. Wenn der Neigungswinkel θ größer als 50° ist, werden spitzwinklige Teilabschnitte in den Eckabschnitten der Blöcke 21A gebildet und es wird schwierig sein, Abriebbeständigkeit zu verbessern.

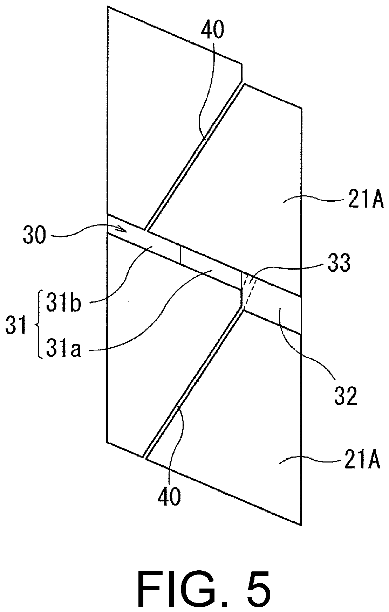

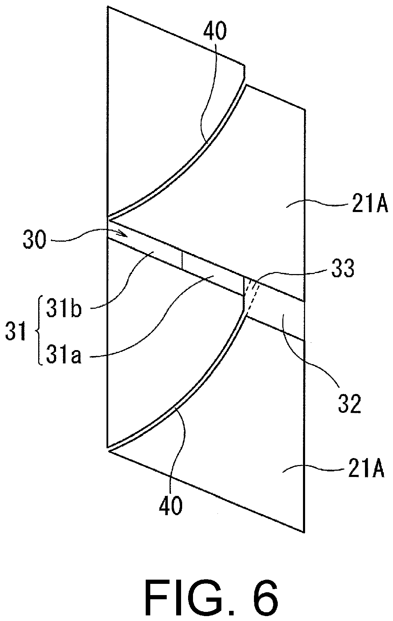

Der Endabschnitt auf der Seite der Lamelle 40, die mit dem schmalen Abschnitt 31 kommuniziert, kann mit einem beliebigen Punkt des schmalen Abschnitts 31 verbunden sein. Als solches ist eine Konfiguration möglich, in der dieser Endabschnitt mit einem Punkt verbunden ist, wo der schmale Abschnitt 31 mit der außeren Hauptrille 12 verbunden ist, wie in Fig. 2 und 3 dargestellt, und es ist auch eine Konfiguration möglich, in der dieser Endabschnitt mit einem mittleren Teilabschnitt des schmalen Abschnitts 31 kommuniziert, wie in Fig. 5 dargestellt. Zusätzlich, wie in Fig. 6 dargestellt, ist eine Konfiguration möglich, in der die Lamelle 40 derart gekrümmt ist, dass sie einen in Reifenbreitenrichtung in der Oberfläche des Laufflächenabschnitts 1 (der Block 21A) nach innen ragenden Bogen bildet.

In der vorliegenden Erfindung ist die Lamelle 40 eine feine Rille, für die die Rillenbreite und die Rillentiefe ausreichend kleiner sind als die der Hauptrillen (die innere Hauptrille 11 und die außeren Hauptrillen 12). Beispielsweise kann die Lamelle 40 eine Rillenbreite von 0,4 mm bis 1,5 mm aufweisen. Zusätzlich ist eine Tiefe ds der Lamelle 40 konfiguriert, dass sie kleiner als die Tiefe d2 des breiten Abschnitts 32 ist, mit dem das erste Ende der Lamelle 40 kommuniziert. Ein Verhältnis ds/d2 der Tiefe ds der Lamelle 40 zur Tiefe d2 des breiten Abschnitts 32 ist vorzugsweise in einem Bereich von 0,3 bis 0,8 eingestellt. Derartiges Konfigurieren der Rillentiefe ist vorteilhaft zum Erreichen von Abflussleistung und Abriebbeständigkeitsleistung auf kompatible Weise.

Es wird bevorzugt, dass die verschiedenen, vorstehend beschriebenen Eigenschaften der vorliegenden Erfindung bei einem Luftreifen zur Verwendung auf einem Kleinlastwagen angewendet werden, wobei ein regulärer Innendruck des Luftreifens 575 kPa oder weniger beträgt. Bei einem derartigen Luftreifen zur Verwendung auf einem Kleinlastwagen, bei der Fahrt auf nassen Straßenoberflächen in einem stark beladenen Zustand, erhöht sich die Belastung auf den Blöcken und Verschleiß tritt nicht nur wahrscheinlicher auf dem gesamten Reifen auf, sondern es besteht auch eine Tendenz dazu, dass sich das Rillenvolumen aufgrund der Verformung der Blöcke und des Zusammensinkens der Rillen verringert, was zu Abnahmen bei der Abflussleistung führt. Durch Anwenden der vorstehend beschriebenen Eigenschaften der vorliegenden Erfindung können die vorstehend beschriebene überlegene Abflussleistung und Abriebbeständigkeitsleistung gezeigt werden, insbesondere bei der Fahrt auf nassen Straßenoberflächen in einem stark beladenen Zustand.

### Beispiele

Dreißig Arten von Luftreifen wurden für das Beispiel des Stands der Technik 1, das Vergleichsbeispiel 1 und die Beispiele 1 bis 28 hergestellt. Diese Reifen hatten eine Reifengröße von 235/60R17, die in Fig. 1 dargestellte Querschnittsform und das in Fig. 2 dargestellte, grundlegende Laufflächenmuster. Die Anzahl der Hauptrillen, die Gesamtheit der Rillenbreiten der Hauptrillen, ob die Umfangsbestandteile der Nebenrillen über den gesamten Reifenumfang fortlaufend waren oder nicht, die überlappende Menge x der Öffnungen auf der Seite der mittleren Hauptrille des Paars Nebenrillen, die auf beiden Seiten der mittleren Hauptrille positioniert waren (Anteil des breiten Abschnitts in Bezug auf die Rillenbreite W2), das Verhältnis W1/W2 der Rillenbreite W1 des schmalen Abschnitts zur Rillenbreite W2 des breiten Abschnitts, das Verhältnis d1a/d1b der Rillentiefe d1a auf der Seite des breiten Abschnitts vom schmalen Abschnitt zur Rillentiefe d1b auf der Seite der außeren Hauptrille vom schmalen Abschnitt, das Verhältnis d1a/d2 der Rillentiefe d1a auf der Seite des breiten Abschnitts vom schmalen Abschnitt zur Rillentiefe d2 des breiten Abschnitts, das Verhältnis d2/D1 der Rillentiefe d2 des breiten Abschnitts zur Rillentiefe D1 der mittleren Hauptrille, das Verhältnis d1b/D2 der Rillentiefe d1b auf der Seite der außeren Hauptrille vom schmalen Abschnitts zur Rillentiefe D2 der außeren Hauptrille, das Verhältnis L1/L1 der Länge L1 des schmalen Abschnitts zur Länge L2 des breiten Abschnitts, das Verhältnis L1a/L1b der Länge L1a des Teilabschnitts des schmalen Abschnitts, wo die Rillentiefe d1a beträgt, zur Länge L1b des Teilabschnitts des schmalen Abschnitts, wo die Rillentiefe d1b beträgt, das Verhältnis L3/L der Gesamtlänge L der Nebenrille zur Länge L3 des Änderungsabschnitts, wo die Rillenbreite sich ändert, und das Verhältnis ds/d2 der Rillentiefe ds der Lamelle zur Rillentiefe des breiten Abschnitts d2 wurden wie in Tabellen 1 und 2 konfiguriert.

Das Beispiel nach dem Stand der Technik ist ein Beispiel, in dem fünf Stegabschnitte durch vier Hauptrillen abgeteilt sind (zwei auf jeder Seite des Reifenäquators) und als solches ist die grundlegende Struktur des Laufflächenmusters anders. Aus Gründen der Zweckmäßigkeit wird diese Struktur jedoch betrachtet, als enthalte sie die mittlere Hauptrille der vorliegenden Erfindung als die Hauptrillen auf der Seite des Reifenäquators, die inneren Stegabschnitte der vorliegenden Erfindung als Stegabschnitte, die zwischen den Hauptrillen auf der Seite des Reifenäquators und den Hauptrillen in Reifenbreitenrichtung außen abgeteilt sind, und die außeren Stegabschnitte der vorliegenden Erfindung als Stegabschnitte, die in Reifenbreitenrichtung außen der Hauptrillen in Reifenbreitenrichtung außen abgeteilt sind. Somit waren die Maße und dergleichen jedes Bestandteils definiert. Hier war der Stegabschnitt, der zwischen dem Paar Hauptrillen auf der Seite des Reifenäquators gebildet ist, ein rippenartiger Stegabschnitt, der fortlaufend in der Reifenumfangsrichtung verläuft. Von einer anderen Perspektive ist Beispiel nach dem Stand der Technik 1 ein Beispiel, das das Laufflächenmuster von Fig. 2 verwendet, in dem die Rillenbreite der mittleren Hauptrille geweitet ist und ein rippenartiger Stegabschnitt zu einer Mitte davon (auf dem Reifenäquator) hinzugefügt ist. Es ist zu beachten, dass beim Beispiel nach dem Stand der Technik 1 die Anzahl der Hauptrillen von den anderen Beispielen abweicht, aber derart konfiguriert ist, dass die Gesamtheit der Rillenbreiten der Hauptrillen ungefähr gleich den anderen Beispielen (z. B. gleich wie Vergleichsbeispiel 1) gestaltet wurde, indem die Rillenbreite jeder der Hauptrillen eingestellt (verengt) wurde.

Diese 30 Arten von Luftreifen wurden mittels der nachstehend beschriebenen Bewertungsverfahren hinsichtlich Nassleistung und Abriebbeständigkeitsleistung bewertet und die Ergebnisse davon sind auch in Tabellen 1 und 2 gezeigt.

### Nassleistung

Die Testreifen wurden auf Räder mit einer Felgengröße von 16x7,0 aufgezogen, auf einen Luftdruck von 475 kPa befüllt und an einem Testfahrzeug mit einem Hubraum vom 2700 cm3 montiert. Bremsstrecke wurde von einem Zustand des Fahrens mit einer Anfangsgeschwindigkeit von 100 km/h auf einer Teststrecke mit einer nassen Straßenoberfläche mit einer Wassertiefe von 10 ±1 mm gemessen. Die Bewertungsergebnisse wurden als Indexwerte ausgedrückt, wobei der Kehrwert der Messwerte verwendet wurde, wobei Beispiel nach dem Stand der Technik 1 ein Referenzindexwert von 100 zugewiesen wurde. Größere Indexwerte geben einen kürzeren Bremsweg und überlegene Nassleistung an.

### Abriebbeständigkeitsleistung

Die Testreifen wurden auf Räder mit einer Felgengröße von 16x7,0 aufgezogen, auf einen Luftdruck von 475 kPa befüllt und an einem Testfahrzeug mit einem Hubraum vom 2700 cm3 montiert. Die Abriebmenge wurde nach Fahren von 50.000 km mit einer Durchschnittsgeschwindigkeit von 60 km/h gemessen. Die Bewertungsergebnisse wurden als Indexwerte unter Verwendung des Kehrwerts der Messwerte ausgedrückt, wobei dem Beispiel des Stands der Technik 1 ein Referenzindexwert von 100 zugewiesen wird. Größere Indexwerte zeigen eine überlegene Abriebbeständigkeit an.

**[Tabelle 1-I]**

| | | | Beispiel des Stands der Technik 1 | Vergleichsbeispiel 1 | Beispiel 1 | Beispiel 2 | Beispiel 3 | Beispiel 4 |
|---|---|---|---|---|---|---|---|---|
| Hauptrillen | Anzahl | (Rillen) | 4 | 3 | 3 | 3 | 3 | 3 |
| | Gesamtheit der Rillenbreiten | % | 12 | 12 | 17 | 13 | 23 | 17 |
| Nebenrille | Umfangsbestandteile | | Nicht fortlaufend | Nicht fortlaufend | Fortlaufend | Fortlaufend | Fortlaufend | Fortlaufend |
| | Uberlappende Menqe x | % | 0 | 0 | 90 | 90 | 90 | 10 |
| | Neigungswinkel θ | | 55 | 55 | 26 | 26 | 26 | 26 |
| | Verhältnis W1/W2 | | 0,50 | 0,50 | 0,50 | 0,50 | 0,50 | 0,50 |
| | Verhältnis d1a/d1b | | 1,00 | 1,00 | 0,55 | 0,55 | 0,55 | 0,55 |
| | Verhältnis d1a/d2 | | 0,80 | 0,80 | 0,50 | 0,50 | 0,50 | 0,50 |
| | Verhältnis d2/D1 | | 0,80 | 0,80 | 0,75 | 0,75 | 0,75 | 0,75 |
| | Verhältnis d1b/D2 | | 0,64 | 0,64 | 0,68 | 0,68 | 0,68 | 0,68 |
| | Verhältnis L2/L1 | | 0,45 | 0,45 | 0,45 | 0,45 | 0,45 | 0,45 |
| | Verhältnis L1a/L1b | | - | - | 1,3 | 1,3 | 1,3 | 1,3 |
| | Verhältnis L3/L | | 0,75 | 0,75 | 0,75 | 0,75 | 0,75 | 0,75 |
| Lamelle | Kommunizierende Position | | Fig. 3 | Fig. 3 | Fig. 3 | Fig. 3 | Fig. 3 | Fig. 3 |

| | | | Beispiel des Stands der Technik 1 | Vergleichsbeispiel 1 | Beispiel 1 | Beispiel 2 | Beispiel 3 | Beispiel 4 |
|---|---|---|---|---|---|---|---|---|
| | Verhältnis ds/d2 | | 0,55 | 0,55 | 0,55 | 0,55 | 0,55 | 0,55 |
| Nassleistung | | In-dexwert | 100 | 97 | 107 | 103 | 109 | 104 |
| Abriebbestandigkeitsleistung | | Indexwert | 100 | 103 | 106 | 107 | 102 | 106 |

**[Tabelle 1-II]**

| | | | Beispiel 5 | Beispiel 6 | Beispiel 7 | Beispiel 8 | Beispiel 9 | Beispiel 10 | Beispiel 11 |
|---|---|---|---|---|---|---|---|---|---|
| Hauptrillen | Anzahl | (Ril-len) | 3 | 3 | 3 | 3 | 3 | 3 | 3 |
| | Gesamtheit der Rillenbreiten | % | 17 | 17 | 17 | 17 | 17 | 17 | 17 |
| Nebenrille | Umfangsbestandteile | | Fortlaufend | Fortlaufend | Fortlaufend | Fortlaufend | Fortlaufend | Fortlaufend | Fortlaufend |
| | Überlappende Menge x | % | 100 | 90 | 90 | 90 | 90 | 90 | 90 |
| | Neigungswinkel θ | | 26 | 10 | 15 | 40 | 50 | 26 | 26 |
| | Verhältnis W1/W2 | | 0,50 | 0,50 | 0,50 | 0,50 | 0,50 | 0,30 | 0,70 |
| | Verhältnis d1a/d1b | | 0,55 | 0,55 | 0,55 | 0,55 | 0,55 | 0,55 | 0,55 |
| | Verhältnis d1a/d2 | | 0,50 | 0,50 | 0,50 | 0,50 | 0,50 | 0,50 | 0,50 |
| | Verhältnis d2/D1 | | 0,75 | 0,75 | 0,75 | 0,75 | 0,75 | 0,75 | 0,75 |
| | Verhältnis d1b/D2 | | 0,68 | 0,68 | 0,68 | 0,68 | 0,68 | 0,68 | 0,68 |

| | | | Beispiel 5 | Beispiel 6 | Beispiel 7 | Beispiel 8 | Beispiel 9 | Beispiel 10 | Beispiel 11 |
|---|---|---|---|---|---|---|---|---|---|
| | | | | | | | | | |
| | Verhältnis L2/L1 | | 0,45 | 0,45 | 0,45 | 0,45 | 0,45 | 0,45 | 0,45 |
| | Verhältnis L1a/L1b | | 1,3 | 1,3 | 1,3 | 1,3 | 1,3 | 1,3 | 1,3 |
| | Verhältnis L3/L | | 0,75 | 0,75 | 0,75 | 0,75 | 0,75 | 0,75 | 0,75 |
| Lamelle | Kommunizierende Position | | Fig. 3 | Fig. 3 | Fig. 3 | Fig. 3 | Fig. 3 | Fig. 3 | Fig. 3 |
| | Verhältnis ds/d2 | | 0,55 | 0,55 | 0,55 | 0,55 | 0,55 | 0,55 | 0,55 |
| Nassleistung | | In-dexwert | 108 | 102 | 105 | 108 | 109 | 105 | 108 |
| Abriebbeständigkeitsleistung | | Indexwert | 106 | 108 | 107 | 103 | 101 | 107 | 104 |

**[Tabelle 2-I]**

| | | | Beispiel 12 | Beispiel 13 | Beispiel 14 | Beispiel 15 | Beispiel 16 | Beispiel 17 | Beispiel 18 |
|---|---|---|---|---|---|---|---|---|---|
| Hauptrillen | Anzahl | (Rillen) | 3 | 3 | 3 | 3 | 3 | 3 | 3 |
| | Gesamtheit der Rillenbreiten | % | 17 | 17 | 17 | 17 | 17 | 17 | 17 |
| Nebenrille | Umfangsbestandteile | | Fortlaufend | Fortlaufend | Fortlaufend | Fortlaufend | Fortlaufend | Fortlaufend | Fortlaufend |
| | Uberlappende Menge x | % | 90 | 90 | 90 | 90 | 90 | 90 | 90 |
| | Neigungswinkel θ | | 26 | 26 | 26 | 26 | 26 | 26 | 26 |
| | Verhältnis W1/W2 | | 0,50 | 0,50 | 0,50 | 0,50 | 0,50 | 0,50 | 0,50 |

| | | | Beispiel | Beispiel | Beispiel | Beispiel | Beispiel | Beispiel | Beispiel |
|---|---|---|---|---|---|---|---|---|---|
| | | | 12 | 13 | 14 | 15 | 16 | 17 | 18 |
| | Verhältnis d1a/d1b | | 0,30 | 0,40 | 0,60 | 0,70 | 0,55 | 0,55 | 0,55 |
| | Verhältnis d1a/d2 | | 0,40 | 0,45 | 0,55 | 0,60 | 0,50 | 0,50 | 0,50 |
| | Verhältnis d2/D1 | | 0,65 | 0,70 | 0,80 | 0,85 | 0,75 | 0,75 | 0,75 |
| | Verhältnis d1b/D2 | | 0,87 | 0,79 | 0,73 | 0,73 | 0,68 | 0,68 | 0,68 |
| | Verhältnis L2/L1 | | 0,45 | 0,45 | 0,45 | 0,45 | 0,25 | 0,65 | 0,45 |
| | Verhältnis L1a/L1b | | 1,3 | 1,3 | 1,3 | 1,3 | 1,3 | 1,3 | 1,1 |
| | Verhältnis L3/L | | 0,75 | 0,75 | 0,75 | 0,75 | 0,75 | 0,75 | 0,75 |
| Lamelle | Kommunizierende Position | | Fig. 3 | Fig. 3 | Fig. 3 | Fig. 3 | Fig. 3 | Fig. 3 | Fig. 3 |
| | Verhältnis ds/d2 | | 0,55 | 0,55 | 0,55 | 0,55 | 0,55 | 0,55 | 0,55 |
| Nassleistung | | In-dexwert | 105 | 106 | 108 | 109 | 105 | 109 | 108 |
| Abriebbeständigkeitsleistung | | Indexwert | 103 | 105 | 107 | 108 | 108 | 104 | 105 |

**[Tabelle 2-II]**

| | | | Beispiel 19 | Beispiel 20 | Beispiel 21 | Beispiel 22 | Beispiel 23 | Beispiel 24 |
|---|---|---|---|---|---|---|---|---|
| Hauptrillen | Anzahl | (Rillen) | 3 | 3 | 3 | 3 | 3 | 3 |
| | Gesamtheit der Rillenbreiten | % | 17 | 17 | 17 | 17 | 17 | 17 |
| Nebenrille | Umfangsbestandteile | | Fortlaufend | Fortlaufend | Fortlaufend | Fortlaufend | Fortlaufend | Fortlaufend |

| | | | Beispiel | Beispiel | Beispiel | Beispiel | Beispiel | Beispiel |
|---|---|---|---|---|---|---|---|---|
| | | | 19 | 20 | 21 | 22 | 23 | 24 |
| | Uberlappende Menge x | % | 90 | 90 | 90 | 90 | 90 | 90 |
| | Neigungswinkel θ | | 26 | 26 | 26 | 26 | 26 | 26 |
| | Verhältnis W1/W2 | | 0,50 | 0,50 | 0,50 | 0,50 | 0,50 | 0,50 |
| | Verhältnis d1a/d1b | | 0,55 | 0,55 | 0,55 | 0,55 | 0,55 | 0,55 |
| | Verhältnis d1a/d2 | | 0,50 | 0,50 | 0,50 | 0,50 | 0,50 | 0,50 |
| | Verhältnis d2/D1 | | 0,75 | 0,75 | 0,75 | 0,75 | 0,75 | 0,75 |
| | Verhältnis d1b/D2 | | 0,68 | 0,68 | 0,68 | 0,68 | 0,68 | 0,68 |
| | Verhältnis L2/L1 | | 0,45 | 0,45 | 0,45 | 0,45 | 0,45 | 0,45 |
| | Verhältnis L1a/L1b | | 1,5 | 1,3 | 1,3 | 1,3 | 1,3 | 1,3 |
| | Verhältnis L3/L | | 0,75 | 0 | 1,5 | 0,75 | 0,75 | 0,75 |
| Lamelle | Kommunizierende Position | | Fig. 3 | Fig. 3 | Fig. 3 | Fig. 6 | Fig. 3 | Fig. 3 |
| | Verhältnis ds/d2 | | 0,55 | 0,55 | 0,55 | 0,55 | 0,30 | 0,80 |
| Nassleistung | | In-dexwert | 106 | 106 | 106 | 107 | 106 | 107 |
| Abriebbeständigkeitsleistung | | Indexwert | 107 | 105 | 105 | 106 | 106 | 105 |

Wie aus Tabellen 1 und 2 ersichtlich ist, zeigte jedes der Beispiele 1 bis 24 Nassleistung und Abriebbestandigkeitsleistung, die auf ausgewogene Weise verglichen mit Beispiel nach dem Stand der Technik 1 verbessert war. Andererseits war in Vergleichsbeispiel 1 die Anzahl der Hauptrillen geringer als in Beispiel nach dem Stand der Technik 1 und als ein Ergebnis, während die Abriebbeständigkeitsleistung verbessert war, waren die Umfangsbestandteile der Nebenrillen nicht über den gesamten Umfang fortlaufend, die überlappende Menge x war 0 und das Paar Nebenrillen, das auf beiden Seiten der mittleren Hauptrille positioniert war, war nicht fortlaufend und somit nahm die Nassleistung ab.

Auflistung der Bezugszeichen
1 Laufflächenabschnitt
2 Seitenwandabschnitt
3 Reifenwulstabschnitt
4 Karkassenschicht
5 Wulstkern
6 Wulstfüller
7, 8 Gürtelschicht
8 Gürtelverstärkungsschicht
11 Mittlere Hauptrille
12 Äußere Hauptrille
21 Innere Hauptrille
21A Block
22 Äußere Hauptrille
30 Nebenrille
31 Schmaler Abschnitt
32 Breiter Abschnitt
40 Lamelle
51 Äußere Nebenrille
52 Feine Umfangsrille
53 Äußere Lamelle
54 Hilfsrille
CL Reifenäquator
E Bodenkontaktrand

## Patentansprüche

1. Luftreifen, umfassend:
eine in eine Reifenumfangsrichtung verlaufende mittlere Hauptrille auf einem Reifenäquator eines Laufflächenabschnitts;
eine äußere Hauptrille, die auf beiden Seiten in einer Reifenbreitenrichtung der mittleren Hauptrille in Reifenumfangsrichtung verläuft;
innere Stegabschnitte, die zwischen der mittleren Hauptrille und den äußeren Hauptrillen geteilt gebildet sind;
eine Mehrzahl von Nebenrillen, die in einem Abstand in Reifenumfangsrichtung gebildet sind und in den inneren Stegabschnitten in Reifenbreitenrichtung verlaufen, für die ein erstes Ende mit der mittleren Hauptrille kommuniziert und ein zweites Ende mit der äußeren Hauptrille kommuniziert;
die inneren Stegabschnitte, die durch die Mehrzahl von Nebenrillen in eine Mehrzahl von Blöcken geteilt sind; wobei
ein Paar der Nebenrillen, das auf beiden Seiten der mittleren Hauptrille angeordnet ist, in eine gleiche Richtung in Bezug auf die Reifenbreitenrichtung geneigt ist und derart angeordnet ist, dass Offnungen auf einer Seite der mittleren Hauptrille mindestens teilweise in der Reifenumfangsrichtung überlappen;
die Nebenrillen derart angeordnet sind, dass Umfangsbestandteile der Nebenrillen über einen gesamten Reifenumfang fortlaufend sind;
eine Rillenbreite jeder der Nebenrillen an einem mittleren Abschnitt in einer Längenrichtung der Nebenrillen sich derart ändert, dass jede der Nebenrillen einen schmalen Abschnitt, der auf einer Seite der äußeren Hauptrille angeordnet ist und eine Rillenbreite W1 aufweist, die relativ klein ist, und einen breiten Abschnitt einschließt, der auf der Seite der mittleren Hauptrille angeordnet ist und eine Rillenbreite W2 aufweist, die relativ groß ist; und
eine Lamelle in jedem Block gebildet ist, die einen Punkt, der am weitesten zu einer Seite des schmalen Abschnitts vom breiten Abschnitt liegt, mit dem schmalen Abschnitt verbindet.

2. Luftreifen gemäß Anspruch 1, wobei:
ein Neigungswinkel der Nebenrillen in Bezug auf die Reifenbreitenrichtung von 10° bis 50° beträgt.

3. Luftreifen gemäß Anspruch 1 oder 2, wobei:
eine Rillentiefe des schmalen Abschnitts auf einer Seite des breiten Abschnitts flach und auf einer Seite der äußeren Hauptrille tief ist.

4. Luftreifen gemäß Anspruch 3, wobei:
ein Verhältnis d1a/d1b einer Rillentiefe d1a auf der Seite des breiten Abschnitts vom schmalen Abschnitt zu einer Rillentiefe d1b auf der Seite der äußeren Hauptrille vom schmalen Abschnitt in einem Bereich von 0,3 bis 0,7 liegt.

5. Luftreifen gemäß einem der Ansprüche 1 bis 4, wobei:
ein Verhältnis einer Gesamtheit von Rillenbreiten der mittleren Hauptrille und der äußeren Hauptrillen in Bezug auf eine Bodenkontaktbreite von 13% bis 23% beträgt.

6. Luftreifen gemäß einem der Ansprüche 1 bis 5, der bei einem Luftreifen zur Verwendung an einem Kleinlastwagen angewendet wird, wobei ein regulärer Innendruck des Luftreifens 575 kPa oder weniger beträgt.
